# FASCICULE DE BREVET EUROPEEN

(11) **EP 2 448 670 B1**
(45) Date de publication et mention de la délivrance du brevet: **23.09.2015**
(21) Numéro de dépôt: 10734170.3
(22) Date de dépôt: 15.06.2010
(51) Int. Cl.: B01J 23/62, B01J 23/644, B01J 35/00, C10G 35/09, C07C 5/41, B01J 27/185, B01J 27/186, B01J 37/02, B01J 37/24, B01J 23/64

(54) **PROCEDE DE PREPARATION D'UN CATALYSEUR MULTI-MÉTALLIQUE PRÉSENTANT UNE PROXIMITÉ DE SITES OPTIMISÉE**
PROZESS ZUR HERSTELLUNG EINES MULTIMETALLISCHEN KATALYSATORS MIT EINER OPTIMIERTEN STELLENANORDNUNG
PROCESS OF PREPARATION OF A MULTIMETALLIC CATALYST HAVING AN OPTIMIZED VICINITY OF SITES

(30) Priorité: 01.07.2009 FR 0903226
(43) Date de publication de la demande: 09.05.2012
(73) Titulaire: IFP Energies nouvelles, 92852 Rueil-Malmaison Cedex (FR)
(72) Inventeur: AVENIER, Priscilla, F-38000 Grenoble (FR); LACOMBE, Sylvie, F-69390 Vernaison (FR); CAUFFRIEZ, Hervé, F-69390 Charly (FR)
(86) Numéro de dépôt international: PCT/FR2010/000443
(87) Numéro de publication internationale: WO 2011/012776

(56) Documents cités:
- WO-A2-2008/087273
- US-A- 4 416 804
- US-A- 4 522 935
- US-A1- 2003 220 192

## Description

### DOMAINE DE L'INVENTION

La présente invention concerne le domaine de la conversion des hydrocarbures et plus spécifiquement du reformage de charges hydrocarbonées en présence d'un catalyseur pour produire des coupes essences. L'invention concerne également des formulations catalytiques améliorées à base d'au moins un métal du groupe du platine utilisables pour cette conversion, ainsi que leur mode de préparation.

### ART ANTERIEUR

De nombreux brevets décrivent l'addition de promoteurs à des catalyseurs à base de platine afin d'améliorer leurs performances en reformage de charges hydrocarbonées. Ainsi le brevet US 2,814,599 décrit l'addition de promoteurs tels que le gallium, l'indium, le scandium, l'yttrium, le lanthane, le thallium ou l'actinium, à des catalyseurs à base de platine ou de palladium.

Le brevet US 4,522,935 décrit des catalyseurs de reformage comprenant du platine, de l'étain, de l'indium et un composé halogéné déposé sur un support dans lesquels le rapport atomique indium/platine est supérieur à 1,14.

Le brevet FR 2 840 548 décrit un catalyseur sous forme d'un lit homogène de particules comprenant une matrice amorphe, au moins un métal noble, au moins un halogène et au moins un métal additionnel. Ce métal additionnel est préférentiellement choisi dans le groupe constitué par l'étain, le germanium, le plomb, le gallium, l'indium, le thallium, le rhénium, le manganèse, le chrome, le molybdène et le tungstène.

Le phosphore est connu par ailleurs pour augmenter les rendements en composés hydrocarbonés de strictement plus de 4 atomes de carbone (C5+) et en particulier en produits aromatiques. Cette propriété est revendiquée dans les brevets US 2,890,167, US 3,706,815, US 4,367,137, US 4,416,804, US 4,426,279 et US 4,463,104. Plus récemment, il a été décrit dans le brevet US2007/0215523 que l'ajout de quantités diluées de phosphore, moins de 1 % pds, stabilise le support en permettant une meilleure rétention de surface spécifique et de chlore pendant son utilisation dans des procédés de reformage catalytique.

Les brevets US 6,864,212 et US 6,667,270 décrivent un support contenant du bismuth et du phosphore répartis de façon homogène et utilisé pour la préparation d'un catalyseur de reformage catalytique de naphta hydrotraité. D'après ces brevets, l'ajout de bismuth seul dans le support permet de ralentir la formation de coke et le déclin de l'activité, mais tout en diminuant le rendement en C5+, alors que l'ajout de phosphore seul augmente ce rendement, sans améliorer la stabilité du catalyseur. La combinaison de ces deux éléments permet de ralentir encore plus la formation de coke tout en présentant les meilleures sélectivités pour des teneurs en Bi comprises entre 0,10 et 0,06 % pds, et une teneur en P de 0,3 % pds. Ces deux brevets ne revendiquent pas d'autres éléments.

Le document WO2008/087273 concerne un catalyseur comprenant un métal M du groupe du platine, au moins un promoteur X1 sélectionné dans le groupe constitué par l'étain, le germanium et le plomb, et éventuellement au moins un promoteur X2 sélectionné dans le groupe constitué par le gallium, l'indium, et le thallium, un composé halogéné et un support poreux, dans lequel le rapport atomique X1/M et éventuellement X2/M est compris entre 0,3 et 8, le rapport Hᵢᵣ/M mesuré par adsorption d'hydrogène est supérieur à 0,40 et l'indice IBM de bimétallicité mesuré par titrage hydrogène/oxygène est supérieur à 108. Le catalyseur est obtenu en particulier en déposant le promoteur X1 en deux fois (deux étapes distinctes), une première étape située avant l'introduction de l'élément du groupe du platine, et une deuxième étape située après l'introduction de l'élément du groupe du platine.

La spectroscopie RMN à l'état solide, en particulier la RMN du ³¹P en rotation à l'angle magique (MAS) a été utilisée de façon intensive pour la caractérisation de l'environnement des atomes de phosphore dans des matériaux de type aluminophosphate. Les matériaux de ce type présentent une gamme de déplacement chimique de 0 à -30 ppm, comme il est décrit dans les articles de Sayari et al. (Chem. Mater. 8 1996 2080-2088) ou de Blackwell et al. (J. Phys. Chem. 92 1988 3965-3970 ; J. Phys. Chem. 88 1984 6135-6139). Parmi cette gamme de déplacements, on peut distinguer les sites du phosphore pleinement condensés dans l'alumine des sites de condensation incomplète, comme l'indiquent Huang et al. (J. Am. Chem. Soc. 127(8) 2005 2731-2740). Cependant, pour déterminer plus précisément la nature des environnements du phosphore, cette séquence simple ne suffit pas. Le couplage de cette séquence avec la RMN ¹H → ³¹P en polarisation croisée à l'angle magique (CP MAS) permet par exemple de mettre en évidence les environnements protonés du phosphore et donc de discriminer les atomes de surface des atomes dans la matrice.

Par ailleurs le suivi par spectroscopie infrarouge de l'adsorption de monoxyde de carbone sur les catalyseurs métalliques supportés est un moyen d'acquérir des informations sur la densité électronique des particules métalliques ou sur l'acidité du support, selon que l'adsorption s'effectue à température ambiante ou à celle de l'azote liquide. Dans le cas par exemple d'un catalyseur à base de platine supporté sur alumine, à température ambiante, le monoxyde de carbone s'adsorbe préférentiellement sur le platine. Cette adsorption s'effectue via deux liaisons :
- une liaison σ d'une orbitale p du CO vers une orbitale d vacante du métal
- une liaison en retour π d'une orbitale d pleine vers l'orbitale anti-liante vide de CO.

La force de cette dernière liaison dépend de la capacité du métal à donner des électrons. Ainsi, dans le cas d'une particule métallique enrichie en électrons, la rétro-donation est plus forte et la liaison C-O s'en trouve affaiblie :
le nombre d'onde de la liaison C-O diminue.

Dans le cas des particules métalliques, on observe que le nombre d'onde de la liaison C-O v_{CO} varie avec le taux de recouvrement. Ce phénomène est expliqué par la perturbation causée par le couplage dipolaire entre molécules adsorbées. Afin de s'affranchir de cette perturbation, il convient d'extrapoler la valeur du nombre d'onde de la liaison C-O à taux de recouvrement nul. Cette valeur offre alors des informations sur la densité électronique des particules.

En pratique, l'analyse du déplacement de la bande de vibration de la liaison C-O dans la zone correspondant à l'adsorption du monoxyde de cabone sur les particules métalliques, selon la méthode décrite par Primet et al. dans Journal of Catalysis 88 (1984) pp273-282 permet d'obtenir le nombre d'onde de la liaison C-O à taux de recouvrement nul.

### RESUME DE L'INVENTION

L'invention concerne un catalyseur comprenant au moins un métal M du groupe du platine, de l'étain, un promoteur phosphore, un composé halogéné, un support poreux d'alumine et au moins un promoteur X1 sélectionné dans le groupe constitué par le gallium, l'indium, l'antimoine. Le catalyseur présente un signal en RMN ³¹P en rotation à l'angle magique compris entre -30 et -50 ppm par rapport au signal de H₃PO₄. Il présente aussi un nombre d'onde de la liaison de monoxyde de carbone à taux de recouvrement nul supérieur à 2077 cm⁻¹. L'invention concerne aussi la préparation de ce catalyseur et son utilisation dans les réactions de reformage catalytique ou de production d'aromatiques.

### DESCRIPTION DETAILLEE DE L'INVENTION

L'invention concerne un catalyseur comprenant au moins un métal M du groupe du platine, de l'étain, un promoteur phosphore, un composé halogéné, un support poreux d'alumine et au moins un promoteur X1 sélectionné dans le groupe constitué par le gallium, l'indium, et l'antimoine, de manière préférée dans le groupe constitué par le gallium et l'indium, ledit catalyseur présentant un signal en RMN ³¹P en rotation à l'angle magique compris entre -30 et -50 ppm par rapport au signal de H₃PO₄.

Les catalyseurs selon l'invention conduisent à des performances catalytiques améliorées. En particulier, la sélectivité de ces catalyseurs est accrue vers la formation de composés en C5+ (c'est-à-dire de composés comprenant au moins 5 atomes de carbone), alors que la formation de coke est fortement diminuée.

Le procédé de préparation du catalyseur comprend une étape d'introduction du phosphore et du ou des promoteur(s) X1 pendant une étape de préparation du support. Les signaux observés en RMN MAS ³¹P qui sont une caractéristique des catalyseurs selon l'invention sont obtenus si le phosphore et le ou les éléments X1 sont introduits ensemble à la synthèse du support.

Le rapport atomique Sn/M est généralement compris entre 0,5 et 4,0, de manière plus préférée entre 1,0 et 3,5, et de manière très préférée entre 1,3 et 3,2. Le rapport X1/M est généralement compris entre 0,1 et 5,0, de manière plus préférée entre 0,2 et 3,0, et de manière très préférée entre 0,4 et 2,2. Le rapport P/M est généralement compris entre 0,2 et 30,0, de manière plus préférée entre 0,5 et 20,0, et de manière très préférée entre 1,0 et 15,0. La teneur en métal M est généralement comprise entre 0,01 à 5 % poids, de manière plus préférée entre 0,01 à 2 % et de manière encore plus préférée entre 0,1 à 1 % poids.

Le métal M est généralement le platine ou le palladium, de manière très préférée le platine. Le composé halogéné est généralement sélectionné dans le groupe constitué par lé fluor, le chlore, le brome et l'iode. La teneur en composé halogéné est généralement comprise entre 0,1 à 15,0 % poids, de manière plus préférée entre 0,1 à 8,0 % poids, de manière encore plus préférée entre 0,2 à 5 % poids. Si le composé halogéné est le chlore, la teneur en chlore est généralement comprise entre 0,0 et 5,0 % poids, de préférence entre 0,5 à 2,0 % poids.

Les techniques RMN ³¹P MAS et ¹H →³¹P CP MAS ont été appliquées à nos divers échantillons. Elles ont permis de révéler dans un premier temps l'existence, pour les catalyseurs présentant des performances catalytiques optimisées, d'un signal de déplacement chimique compris entre -30 et -50 ppm en RMN ³¹P MAS par rapport au H₃PO₄ pris comme référence. Dans un second temps, la combinaison des séquences MAS et CP MAS a également permis pour ces catalyseurs, de mettre en évidence un gain en signal important pour le signal RMN ³¹P de déplacement chimique compris entre 0 et -7 ppm. Ce signal correspond à une partie du phosphore de surface qui est protoné et est caractéristique de la manière dont le support est préparé.

Les spectres ont été obtenus sur un spectromètre Bruker DSX 400 Mhz à l'aide d'une sonde MAS 4 mm. Les échantillons ont été analysés sous forme oxydée. La fréquence de rotation a été fixée entre 10 et 12 kHz pour les deux types d'expérimentations (³¹P MAS et ¹H→³¹P CP MAS). Les spectres ¹H→³¹P CP MAS ont été obtenus en basculant l'aimantation de π/2 sur le proton pendant un temps compris entre 2 et 5 µsec. Les temps de contact CP utilisés ont été optimisés pour répondre aux conditions de Hartmann Hahn. Les déplacements chimiques sont exprimés par rapport à ceux de H₃PO₄, pris comme référence.

Les analyses de spectroscopie infrarouge ont été effectuées sur un spectromètre Nexus 1. Préalablement à l'adsorption de CO, les échantillons sont prétraités avec une montée en température de 25°C à 450°C en 4h avec un palier de 1 h à 150°C, puis laissés à 450°C sous vide secondaire pendant 10h. Ils sont ensuite réduits à 450°C, pendant 30 min sous excès d'H₂. On applique ensuite un vide secondaire pendant 15 min. La procédure de réduction est répétée 4 fois.

L'adsorption de CO par pulses est réalisée à température ambiante, puis, le monoxyde de carbone est désorbé à 25, 50, 75, 100 et 150°C. A chaque température, un spectre infrarouge est enregistré. On applique ensuite la méthode décrite par Primet et al. dans Journal of Catalysis 88 (1984) pp273-282 pour extrapoler le nombre d'onde de la liaison C-O à taux de recouvrement nul v⁰_{CO}.

Ces mesures ont mis en évidence que les rendements en aromatiques optimisés dans la réaction de reformage catalytique de naphta sont attribués aux catalyseurs dont la densité électronique sur le métal M est diminuée et qui se traduit par une v⁰_{CO} à taux de recouvrement nul strictement supérieur à 2077 cm⁻¹.

Le support est de l'alumine. Selon l'invention, ledit support poreux se présente avantageusement sous forme de billes, d'extrudés, de pastilles ou de poudre. De manière très avantageuse, ledit support se présente sous forme de billes ou d'extrudés. Le volume poreux du support est de préférence compris entre 0,1 et 1,5 cm³/g, de manière plus préférée compris entre 0,4 et 0,8 cm³/g. Par ailleurs, ledit support poreux présente une surface spécifique comprise avantageusement entre 50 et 600 m²/g, de préférence entre 100 et 400 m²/g, voire entre 150 et 300 m²/g.

L'invention concerne aussi le procédé de préparation du catalyseur selon l'invention, comprenant les étapes suivantes :
a) introduction du ou des promoteurs X1 et du phosphore à un sol d'un précurseur d'alumine préformé, puis mise en forme du support,
b) introduction de l'étain lors de l'introduction du ou des promoteurs X1 et du phosphore lors de l'étape a) et avant la mise en forme du support, les étapes a) et b) étant simultanées,
c) séchage du produit obtenu à l'issue de l'étape b),
d) calcination du produit obtenu à l'étape c) à une température comprise entre 350 et 650°C,
e) dépôt d'au moins un métal M du groupe du platine,
f) séchage sous flux du gaz neutre ou sous flux de gaz contenant de l'oxygène, à une température modérée et n'excédant pas 150°C,
g) calcination du produit obtenu à l'étape f) à une température comprise entre 350 et 650°C.

L'étain peut n'être introduit que partiellement avant la mise en forme du support, le procédé comprenant à ce moment une étape supplémentaire de dépôt d'une fraction complémentaire de l'étain sur le support, soit entre les étapes d) et e), suivie ou non d'un séchage et d'une calcination, soit entre les étapes e) et f), soit après l'étape g), suivie d'un séchage et d'une calcination.

La calcination de l'étape g) est généralement menée en présence d'air, éventuellement enrichi en oxygène ou en azote.

Les promoteurs X1, P et Sn peuvent être introduits au moyen de toute technique connue de l'homme du métier. Lors de leur introduction dans le support, les promoteurs X1, P et Sn peuvent être ajoutés par mélange, coprécipitation, dissolution sans être limitatif.

L'introduction d'étain est simultanée avec celle des précurseurs X1 et P.

Les précurseurs sont ajoutés à un sol de précurseur de l'oxyde majoritaire préformé.

La mise en forme du support est conduite selon les techniques de l'art antérieur de mise en forme du support telles que les procédures de mise en forme par extrusion ou par coagulation en gouttes (Oil-Drop selon la terminologie anglo-saxonne).

Les précurseurs de X1 sont de plusieurs types selon la nature de X1 et peuvent être utilisés seuls ou en mélange. Dans le cas de l'indium, des halogénures, des nitrates, sulfates, du perchlorate, cyanure, hydroxyde d'indium conviennent. Des précurseurs de type halogénures, nitrates, sulfates, cyanures, hydroxyde et oxyhalogénures de gallium peuvent être utilisés. Dans le cas de l'antimoine, des nitrates, sulfates et hydroxyde d'antimoine conviennent.

Les précurseurs de l'étain peuvent être minéraux ou de type organométallique, éventuellement de type organométallique hydrosoluble. Différents précurseurs peuvent être utilisés, seuls ou en mélange. En particulier, l'étain peut être choisi et ce, de façon non limitative, dans le groupe formé par les composés halogénés, hydroxydes, carbonates, carboxylates, sulfates, tartrates et nitrates. Ces formes de l'étain peuvent être introduites dans le milieu de préparation du catalyseur telles quelles ou générées in situ (par exemple par introduction d'étain et d'acide carboxylique). Les précurseurs de type organométallique à base d'étain peuvent être par exemple SnR4, où R représente un groupement alkyle, par exemple le groupement butyle, Me₃SnCl, Me₂SnCl₂, Et₃SnCl, Et₂SnCl₂, EtSnCl₃, iPrSnCl₂ et les hydroxydes Me₃SnOH, Me₂Sn(OH)₂, Et₃SnOH, Et₂Sn(OH)₂, les oxydes (Bu₃Sn)₂O, l'acétate Bu₃SnOC(O)Me. De façon préférée, les espèces halogénées, en particulier chlorées, d'étain seront utilisées. En particulier, SnCl₂ ou SnCl₄ seront employés avantageusement.

Les promoteurs Sn, X1 et P ayant été introduits dans le support ou sur le support préalablement formé dans le cas de l'étain, le protocole de préparation des catalyseurs selon l'invention nécessite une calcination avant le dépôt du métal M du groupe du platine (étape d). Cette calcination est de préférence menée à une température comprise entre 350 et 650°C et de préférence comprise entre 400 et 600°C et de manière encore plus préférée comprise entre 400 et 550°C. La montée en température peut être régulière ou inclure des paliers de température intermédiaires, ces paliers étant atteints avec des vitesses de montée en température fixes ou variables. Ces montées en températures peuvent donc être identiques ou différer par leur vitesse (en degré par minute ou par heure). L'atmosphère de gaz utilisé durant la calcination contient de l'oxygène, de préférence entre 2 et 50 % en volume et de manière plus préférée entre 5 et 25 %. De l'air peut donc également être utilisé lors de cette étape de calcination.

Après obtention du support, un dépôt d'au moins un métal du groupe du platine M est réalisé (étape e). Dans cette étape, le métal M peut être introduit par imprégnation à sec ou en excès de solution, en utilisant un précurseur ou un mélange de précurseurs contenant un métal M du groupe du platine. L'imprégnation peut être réalisée en présence d'espèces agissant sur l'interaction entre le précurseur du métal M et le support. Ces espèces peuvent être, et sans être limitatif, des acides minéraux (HCl, HNO3) ou organiques (types acides carboxyliques ou polycarboxyliques), et des composés organiques de type complexants. De manière préférée l'imprégnation est réalisée selon toute technique connue de l'homme de l'art permettant d'obtenir une répartition homogène du métal M au sein du catalyseur.

Les précurseurs du métal M font partie du groupe suivant, sans que cette liste ne soit limitative: acide hexachloroplatinique, acide bromoplatinique, chloroplatinate d'ammonium, chlorures de platine, dichlorocarbonyl dichlorure de platine, chlorure de platine tétra-amine.

A ce stade, le catalyseur contenant X1, Sn, P et le platine est séché (étape f), sous atmosphère neutre ou contenant de l'oxygène (de l'air pouvant être utilisé), à une température modérée et n'excédant pas de préférence 250°C. De préférence, le séchage est mis en oeuvre à une température inférieure ou égale à 200°C et sur une durée de quelques minutes à quelques heures.

Cette étape est alors suivie d'une calcination du produit obtenu à l'étape f. Cette calcination est de préférence menée en présence d'air. Cet air peut également être enrichi en oxygène ou en azote. De préférence, la teneur en oxygène de ce gaz atteint 0,5 à 30,0 % volumique et de façon encore plus préférée 2 à 25 %.

Cette calcination est menée à une température intervenant entre 350 et 650°C et de préférence entre 400 et 650 °C et de manière encore plus préférée entre 450 et 550 °C. La rampe de température peut éventuellement contenir des paliers en température.

Lorsque les divers précurseurs utilisés dans la préparation du catalyseur selon l'invention ne contiennent pas d'halogène ou contiennent de l'halogène en quantité insuffisante, il peut être nécessaire d'ajouter un composé halogéné lors de la préparation. Tout composé connu de l'homme du métier peut être utilisé et incorporé à l'une quelconque des étapes de la préparation du catalyseur selon l'invention. En particulier, il est possible d'utiliser des composés de type Friedel et Crafts tel que du chlorure ou du bromure d'aluminium. Il est également possible d'utiliser des composés organiques tels que des halogénures de méthyle ou d'éthyle, par exemple du dichlorométhane, du chloroforme, du dichloroéthane, du méthyle chloroforme ou du tétrachlorure de carbone.

Le chlore peut également être ajouté au catalyseur selon l'invention au moyen d'un traitement d'oxychloration. Un tel traitement peut par exemple être effectué à 500 °C pendant 4 heures sous un débit d'air contenant la quantité de chlore gazeux nécessaire pour déposer la quantité de chlore souhaitée et une quantité d'eau avec un rapport molaire H₂O/Cl voisin par exemple de 20.

Le chlore peut aussi être ajouté au moyen d'une imprégnation par une solution aqueuse d'acide chlorhydrique. Un protocole typique consiste à imprégner le solide de façon à introduire la quantité de chlore souhaitée. Le catalyseur est maintenu en contact avec la solution aqueuse pendant une durée suffisamment longue pour déposer cette quantité de chlore, puis le catalyseur est essoré et séché à une température comprise entre 80 et 150 °C, puis enfin calciné sous air à une température comprise entre 450 °C et 650 °C.

L'invention concerne aussi la mise oeuvre du catalyseur dans une réaction de reformage catalytique ou de production d'aromatiques par mise en contact dudit catalyseur avec une charge hydrocarbonée. Les procédés de reformage permettent d'augmenter l'indice d'octane des fractions essences provenant de la distillation du pétrole brut et/ou d'autres procédés de raffinage telles que par exemple le craquage catalytique ou le craquage thermique.

Les procédés de production d'aromatiques fournissent les produits de base (benzène, toluène, xylènes) utilisables en pétrochimie.

Ces deux procédés revêtent un intérêt supplémentaire en contribuant à la production de quantités importantes d'hydrogène indispensable pour les procédés d'hydrogénation et d'hydrotraitement de la raffinerie. Ces deux types de procédés se différencient par le choix des conditions opératoires et de la composition de la charge qui sont connus de l'homme du métier.

La charge des procédés de reformage contient généralement des hydrocarbures paraffiniques, naphténiques et aromatiques contenant de 5 à 12 atomes de carbone par molécule. Cette charge est définie, entre autres, par sa densité et sa composition pondérale. Ces charges peuvent avoir un point initial d'ébullition compris entre 40 °C et 70 °C et un point final d'ébullition compris entre 160 °C et 220 °C. Elles peuvent également être constituées d'une fraction ou un mélange de fractions essences ayant des points d'ébullition initiaux et finaux compris entre 40 °C et 220 °C. La charge peut également être constituée par un naphta lourd ayant un point d'ébullition compris entre 160 °C à 200 °C.

Typiquement, le catalyseur de reformage est chargé dans une unité et préalablement soumis à un traitement de réduction. Cette étape de réduction est généralement effectuée sous atmosphère d'hydrogène dilué ou pur et à une température avantageusement comprise entre 400°C et 600°C, de préférence entre 450°C et 550°C.

La charge est ensuite introduite en présence d'hydrogène et avec un rapport molaire hydrogène/hydrocarbures de la charge généralement compris entre 0,1 et 10, de préférence entre 1 et 8. Les conditions opératoires du reformage sont généralement les suivantes : une température de préférence comprise entre 400°C et 600°C, de manière plus préférée entre 450°C et 540°C, et une pression de préférence comprise entre 0,1 MPa et 4 MPa et de manière plus préférée entre 0,25 MPa et 3,0 MPa. Tout ou partie de l'hydrogène produit peut être recyclé à l'entrée du réacteur de reformage.

### EXEMPLES:

Les exemples qui suivent illustrent l'invention.

### Exemple 1 (comparatif) :

### Préparation d'un catalyseur A : Pt/(Al₂O₃-Sn)-Cl

Un support sous forme de billes d'alumine, contenant 0,3 % poids d'étain, avec un diamètre moyen de 1,2 mm est préparé en mettant en contact du dichlorure d'étain avec un hydrosol d'alumine obtenu par hydrolyse de chlorure d'aluminium. On fait ensuite passer l'hydrosol d'alumine ainsi obtenu dans une colonne verticale remplie d'huile additivée. Les sphères ainsi obtenues sont traitées thermiquement jusqu'à 600 °C de façon à obtenir des billes de bonne résistance mécanique. Le support ainsi obtenu présente une surface BET de 205 m²/g.

Un catalyseur A est préparé sur ce support, en déposant 0,3% poids de platine et 1 % poids de chlore sur le catalyseur final. A 100 g du support alumine contenant de l'étain, on ajoute 400 cm³ d'une solution aqueuse d'acide hexachloroplatinique et d'acide chlorhydrique. On laisse en contact 4 heures puis on essore. On sèche à 120 °C puis on calcine pendant 2 heures à 500°C sous un débit d'air de 100 litres par heure, avec une vitesse de montée en température de 7°C par minute. La quantité de tétrachlorure d'étain est choisie de façon à obtenir au total 0,3 % poids d'étain sur le produit calciné. Le catalyseur A obtenu après calcination contient 0,29 % poids de platine, 0,30 % poids d'étain et 1,02 % poids de chlore.

### Exemple 2 (comparatif) :

### Préparation d'un catalyseur B : Pt/(Al₂O₃-Sn-In)-Cl

Un support de billes d'alumine, contenant 0,3 % poids d'étain et 0,3 % poids d'indium, avec un diamètre moyen de 1,2 mm, est préparé en mettant en contact du dichlorure d'étain et du nitrate d'indium avec un hydrosol d'alumine obtenu par hydrolyse de chlorure d'aluminium. On fait ensuite passer l'hydrosol d'alumine ainsi obtenu dans une colonne verticale remplie d'huile additivée. Les sphères ainsi obtenues sont traitées thermiquement jusqu'à 600 °C de façon à obtenir des billes de bonne résistance mécanique. Le support ainsi obtenu présente une surface BET de 201 m²/g.

Un catalyseur B est préparé à partir de ce support en ciblant les mêmes teneurs en platine et chlore que pour l'exemple 1. Le catalyseur B obtenu après calcination contient 0,29 % poids de platine, 0,29 % poids d'étain, 0,30 % poids d'indium et 1,05 % poids de chlore.

### Exemple 3 (comparatif) :

### Préparation d'un catalyseur C : Pt(Al₂O₃-Sn-P)-Cl

Un support de billes d'alumine, contenant 0,3 % poids d'étain et 0,4 % poids de phosphore, avec un diamètre moyen de 1,2 mm, est obtenu de façon similaire à l'exemple 1 en mettant en contact du dichlorure d'étain et de l'acide phosphorique avec un hydrosol d'alumine. Le support ainsi obtenu présente une surface BET de 198 m²/g.

Un catalyseur C est préparé à partir de ce support en ciblant les mêmes teneurs en platine et chlore que pour l'exemple 1. Le catalyseur C obtenu après calcination contient 0,30 % poids de platine, 0,31 % poids d'étain, 0,39 % poids de phosphore et 1,00 % poids de chlore.

### Exemple 4 (selon l'invention) :

### Préparation d'un catalyseur D : Pt/(Al2O3-Sn-In-P)-Cl

Un support de billes d'alumine, contenant 0,3 % poids d'étain 0,3 % poids d'indium et 0,4 % poids de phosphore avec un diamètre moyen de 1,2 mm, est obtenu de façon similaire à l'exemple 1 en mettant en contact du dichlorure d'étain, du nitrate d'indium et de l'acide phosphorique avec un hydrosol d'alumine. Le support ainsi obtenu présente une surface BET de 196 m²/g.

Un catalyseur D est préparé à partir de ce support en ciblant les mêmes teneurs en platine et chlore que pour l'exemple 1. Le catalyseur D obtenu après calcination contient 0,30 % poids de platine, 0,31 % poids d'étain, 0,32 % poids d'indium, 0,38 % poids de phosphore et 1,00 % poids de chlore.

### Exemple 5 (selon l'invention) :

### Préparation d'un catalyseur E : Pt/(Al2O3-Sn-In-P)-Cl

Un support de billes d'alumine est préparé de la même manière que l'exemple 4, avec les mêmes teneurs en étain et en phosphore, mais en n'introduisant que 0,2 % poids d'indium. Le support ainsi obtenu présente une surface BET de 210 m²/g.

Un catalyseur E est préparé à partir de ce support en ciblant les mêmes teneurs en platine et chlore que pour l'exemple 1. Le catalyseur E obtenu après calcination contient 0,31 % poids de platine, 0,31 % poids d'étain, 0,22 % poids d'indium, 0,40 % poids de phosphore et 1,02 % poids de chlore.

### Exemple 6 (comparatif) :

### Préparation d'un catalyseur F : Pt-In/(Al₂O₃-Sn-P)-Cl

Un support est préparé en ciblant les mêmes teneurs en étain et phosphore que pour l'exemple 3. Le support ainsi obtenu présente une surface BET de 180 m²/g.

Un catalyseur F est préparé sur ce support, en ciblant 0,3% poids de platine, 0,3 % poids d'indium et 1% poids de chlore sur le catalyseur final.

A 100 g du support alumine contenant de l'étain et du phosphore, on ajoute 400 cm³ d'une solution aqueuse d'acide hexachloroplatinique et d'acide chlorhydrique. On laisse en contact 4 heures puis on essore. On sèche à 90°C puis on met en contact avec 200 cm³ d'une solution aqueuse de nitrate d'indium en présence d'acide chlorhydrique. On laisse en contact 4 heures, on essore, on sèche à 120°C puis on calcine pendant 2 heures à 500°C sous un débit d'air de 100 litres par heure, avec une vitesse de montée en température de 7°C par minute. Le catalyseur F obtenu après calcination contient 0,30 % poids de platine, 0,32 % poids d'étain, 0,29 % poids d'indium, 0,41 % poids de phosphore et 1,04 % poids de chlore.

### Exemple 7 (comparatif) :

### Préparation d'un catalyseur G : Pt-In-P/(Al₂O₃-Sn)-Cl

Un support est préparé en ciblant les mêmes teneurs en étain que pour l'exemple 1.

Un catalyseur G est préparé sur ce support, en ciblant 0,3 % poids de platine, 0,3 % poids d'indium, 0,4% poids de phosphore et 1% poids de chlore sur le catalyseur final. Le support ainsi obtenu présente une surface BET de 209 m²/g.

A 100 g du support alumine contenant de l'étain et du phosphore, on ajoute 400 cm³ d'une solution aqueuse d'acide hexachloroplatinique et d'acide chlorhydrique. On laisse en contact 4 heures puis on essore. On sèche à 90°C puis on met en contact avec 200 cm³ d'une solution aqueuse de nitrate d'indium et d'acide phosphorique en présence d'acide chlorhydrique. On laisse en contact 4 heures, on essore, on sèche à 120°C puis on calcine pendant 2 heures à 500°C sous un débit d'air de 100 litres par heure, avec une vitesse de montée en température de 7°C par minute. Le catalyseur G obtenu après calcination contient 0,30 % poids de platine, 0,31 % poids d'étain, 0,33 % poids d'indium, 0,38 % poids de phosphore et 1,05 % poids de chlore.

### Exemple 8 (selon l'invention) :

### Préparation d'un catalyseur H : Pt-Sn/(Al₂O₃-Sn-In-P)-Cl

Un support est préparé en ciblant les mêmes teneurs en indium et phosphore que pour l'exemple 4, mais avec 0,2% poids d'étain. Le support ainsi obtenu présente une surface BET de 182 m²/g.

Un catalyseur H est préparé sur ce support, en déposant 0,35% poids de platine, 0,2% poids supplémentaire d'étain de façon à obtenir 0,4% poids d'étain et 1% poids de chlore sur le catalyseur final.

A 100 g du support alumine contenant de l'étain et de l'indium, on ajoute 400 cm³ d'une solution aqueuse d'acide hexachloroplatinique et d'acide chlorhydrique. On laisse en contact 4 heures puis on essore. On sèche à 90°C puis on met en contact avec 200 cm³ d'une solution aqueuse du tétrachlorure d'étain en présence d'acide chlorhydrique. On laisse en contact 4 heures, on essore, on sèche à 120°C puis on calcine pendant 2 heures à 500°C sous un débit d'air de 100 litres par heure, avec une vitesse de montée en température de 7°C par minute. Le catalyseur H obtenu après calcination contient 0,36 % poids de platine, 0,41 % poids d'étain, 0,29 % poids d'indium, 0,41 % poids de phosphore et 0,99 % poids de chlore.

### Exemple 9 (selon l'invention) :

### Préparation d'un catalyseur I : Pt-Sn/(Al₂O₃-Sn-Sb-P)-Cl

Un support de billes d'alumine, contenant 0,1 % poids d'étain, 0,4 % poids d'antimoine et 0,4% poids de phosphore, avec un diamètre moyen de 1,2 mm, est préparé de manière similaire à l'exemple 4 en utilisant du dichlorure d'étain, du nitrate de gallium et de l'acide phosphorique. Le support ainsi obtenu présente une surface BET de 191 m²/g.

Un catalyseur I est préparé à partir de ce support, avec les mêmes teneurs en platine, étain et chlore que pour l'exemple 7. Le catalyseur G obtenu après calcination contient 0,29 % poids de platine, 0,30 % poids d'étain, 0,32 % poids d'indium, 0,42 % poids de phosphore et 1,10 % poids de chlore.

### Exemple 10 Caractérisations Infrarouge et RMN des catalyseurs A à I

Les valeurs des signaux RMN ³¹P des catalyseurs C à I, déterminées selon les méthodes présentées dans la description, ainsi que les gains en aire des différents signaux en séquence {¹H-³¹P} CP MAS sont détaillés dans le tableau 1. Les gains sont calculés comme le rapport entre l'aire du signal obtenu en polarisation croisée (CP MAS) et celle du signal de même déplacement chimique en polarisation directe (MAS).

*Les valeurs des v⁰_{CO} sont également reportées dans ce tableau pour les 9 catalyseurs.*

**tableau 1 : valeurs des déplacements isomériques et d'éclatements quadripolaires des catalyseurs A à I**

| Catalyseur | Caractérisation IR | Caractérisation RMN ³¹P | |
|---|---|---|---|
| | *v⁰_{CO}(cm⁻¹)* | ³¹P MAS δ (ppm) | ¹H → ³¹P CP MAS gain en aire du signal |
| A comparatif | 2071 | * | * |
| B comparatif | 2075 | * | * |
| C comparatif | 2073 | -3 | 1,0 |
| | | -9 | 2,2 |
| | | -21 | 0,8 |
| D selon l'invention | 2089 | -4 | 8,3 |
| | | -11 | 1,0 |
| | | -19 | 1,1 |
| | | -40 | 1,0 |
| E selon l'invention | 2085 | -3 | 4,2 |
| | | -11 | 1,0 |
| | | -19 | 0,9 |
| | | -40 | 1,0 |
| F comparatif | 2075 | -3 | 1,0 |
| | | -9 | 2,3 |
| | | -21 | 0,9 |
| G comparatif | 2071 | -3 | 1,0 |
| | | -9 | 3,5 |
| | | -19 | 0,9 |
| H selon l'invention | 2087 | -4 | 8,1 |
| | | -11 | 1,0 |
| | | -20 | 1,0 |
| | | -40 | 0,9 |
| I selon l'invention | 2082 | -3 | 7,9 |
| | | -11 | 1,0 |
| | | -19 | 1,1 |
| | | -38 | 1,0 |

| | | | |
|---|---|---|---|
| ** Les catalyseurs A et B ne contenant pas de P, la RMN du phosphore ne leur a pas été appliquée,* | | | |

Exemple 11 : *Évaluation des performances des catalyseurs A à I en reformage catalytique* Des échantillons des catalyseurs dont les préparations ont été décrites dans les exemples 1 à 9 ont été mis en oeuvre dans un lit réactionnel adapté à la conversion d'une charge hydrocarbonée, de type naphta issu de la distillation de pétrole. Ce naphta admet la composition suivante (en masse) :
52,6 % en composés paraffiniques,
31,6 % en naphtènes,
15,8 % en molécules aromatiques,
pour une densité totale de 0,759 g/cm³.

L'indice d'octane recherche de la charge est proche de 55.

Après chargement dans le réacteur, les catalyseurs sont activés par traitement thermique sous atmosphère d'hydrogène pur, durant une période de 2 h à 490°C.

L'évaluation des performances catalytiques est effectuée dans des conditions de réactions de reformage, en présence d'hydrogène et du naphta décrit précédemment. En particulier, les conditions de mise en oeuvre et de comparaison des catalyseurs sont les suivantes :
- pression du réacteur maintenu à 8 barg (0,8 MPag),
- débit de charge de 2,0 kg/h par kg de catalyseur,
- rapport molaire hydrogène/hydrocarbures de la charge : 4

La comparaison est effectuée à iso qualité d'indice d'octane recherche des effluents liquides (appelé reformats) résultant de la conversion catalytique de la charge. La comparaison est effectuée pour un indice d'octane recherche de 104.

**tableau 2 : performances des catalyseurs**

| Catalyseur | Rendement C₅⁺ à 148h (% poids) | Rendement C₄⁻ à 148h (% poids) | Rendement aromatiques à 148h (% poids) | Désactivation (°C/h) | Coke (% poids/h) |
|---|---|---|---|---|---|
| A | 88,38 | 8,37 | 76,26 | +0,088 | +0,034 |
| B | 88,79 | 8,05 | 76,52 | +0,140 | +0,038 |
| C | 88,29 | 8,39 | 76,40 | +0,099 | +0,033 |
| D | 89,36 | 7,34 | 76,91 | +0,084 | +0,026 |
| E | 89,12 | 7,58 | 76,90 | +0,099 | +0,030 |
| F | 88,64 | 8,11 | 76,49 | +0,102 | +0,034 |
| G | 88,51 | 8,23 | 76,25 | +0,092 | +0,038 |
| H | 89,22 | 7,45 | 76,88 | +0,085 | +0,029 |
| I | 89,25 | 7,48 | 76,77 | +0,089 | +0,029 |

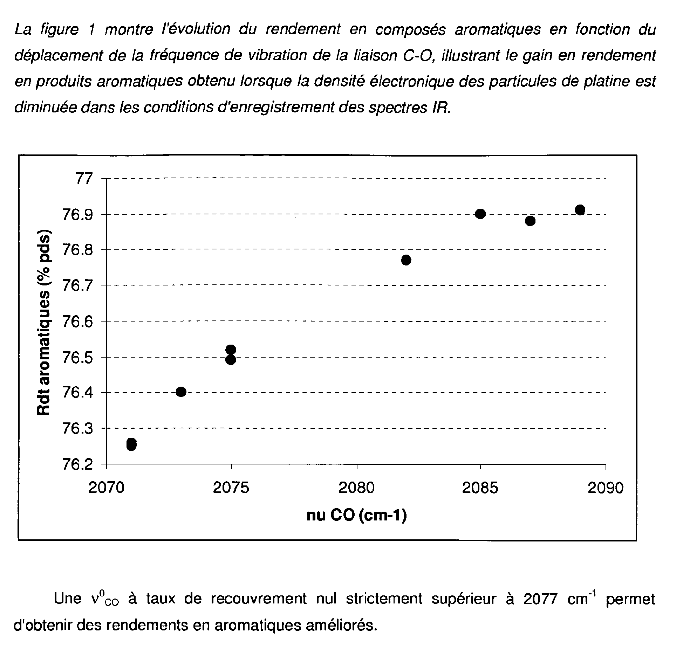

## Revendications

1. Procédé de préparation d'un catalyseur comprenant au moins un métal M du groupe du platine, de l'étain, un promoteur phosphore, un composé halogéné, un support poreux d'alumine et au moins un promoteur X1 sélectionné dans le groupe constitué par le gallium, l'indium, l'antimoine, ledit procédé comprenant les étapes suivantes:
a) introduction du ou des promoteurs X1 et du phosphore à un sol d'un précurseur d'alumine préformé, puis mise en forme du support,
b) introduction de l'étain lors de l'introduction du ou des promoteurs X1 et du phosphore lors de l'étape a) et avant la mise en forme du support, les étapes a) et b) étant simultanées,
c) séchage du produit obtenu à l'issue de l'étape b),
d) calcination du produit obtenu à l'étape c) à une température comprise entre 350 et 650 °C,
e) dépôt d'au moins un métal M du groupe du platine,
f) séchage sous flux du gaz neutre ou sous flux de gaz contenant de l'oxygène, à une température modérée et n'excédant pas 150 °C,
g) calcination du produit obtenu à l'étape f) à une température comprise entre 350 et 650 C.

2. Procédé de préparation d'un catalyseur selon la revendication 1 dans lequel le rapport atomique Sn/M est compris entre 0,5 et 4,0.

3. Procédé de préparation d'un catalyseur selon l'une des revendications 1 à 2 dans lequel le rapport X1/M est compris entre 0,1 et 5,0.

4. Procédé de préparation d'un catalyseur selon l'une des revendications 1 à 3 dans lequel le rapport P/M est compris entre 0,2 et 30,0.

5. Procédé de préparation d'un catalyseur selon l'une des revendications 1 à 4 dans lequel la teneur en métal M est comprise entre 0,01 à 5 % poids.

6. Procédé de préparation d'un catalyseur selon l'une des revendications 1 à 5 dans lequel le métal M est le platine ou le palladium.

7. Procédé de préparation d'un catalyseur selon l'une des revendications 1 à 6 dans lequel le composé halogéné est sélectionné dans le groupe constitué par le fluor, le chlore, le brome et l'iode.

8. Procédé de préparation d'un catalyseur selon l'une des revendications 1 à 7 dans lequel la teneur en composé halogéné est comprise entre 0,1 à 15,0 % poids.

9. Procédé de préparation d'un catalyseur selon l'une des revendications 1 à 8 dans lequel le composé halogéné est le chlore et la teneur en chlore est comprise entre 0,1 et 5,0 % poids.

10. Procédé de préparation du catalyseur selon l'une des revendication 1 à 9 dans lequel l'étain peut n'être introduit que partiellement à l'étape b), le procédé comprenant à ce moment une étape supplémentaire de dépôt d'une fraction complémentaire de l'étain sur le support, soit entre les étapes d) et e), suivie ou non d'un séchage et d'une calcination, soit entre les étapes e) et f), soit après l'étape g), suivie d'un séchage et d'une calcination.

## Patentansprüche

1. Verfahren zum Herstellen eines Katalysators, umfassend mindestens ein Metall M der Gruppe aus Platin, Zinn, einem Phosphor-Promotor, einer halogenierten Verbindung, einem porösen Träger aus Aluminiumoxid und mindestens einem Promotor X1, ausgewählt aus der Gruppe bestehend aus Gallium, Indium, Antimon, wobei das Verfahren die folgenden Schritte umfasst:
a) Einführen des oder der Promotoren X1 und des Phosphorpromotors in ein Sol eines vorgeformten Aluminiumoxidvorläufers, dann Formen des Trägers,
b) Einführen von Zinn während der Einführung des oder der Promotoren X1 und des Phosphorpromotors während des Schritts a) und vor dem Formen des Trägers, wobei die Schritte a) und b) gleichzeitig stattfinden,
c) Trocknen des am Ende von Schritt b) erhaltenen Produkts,
d) Kalzinieren des in Schritt c) erhaltenen Produkts bei einer Temperatur im Bereich zwischen 350 und 650 °C,
e) Abscheiden mindestens eines Metalls M der Gruppe aus Platin,
f) Trocknen unter einem Neutralgasstrom oder einem Gasstrom, der Sauerstoff enthält, bei einer mittleren Temperatur von nicht mehr als 150 °C,
g) Kalzinieren des in Schritt f) erhaltenen Produkts bei einer Temperatur im Bereich zwischen 350 und 650 °C.

2. Verfahren zum Herstellen eines Katalysators nach Anspruch 1, wobei das Atomverhältnis Sn/M im Bereich zwischen 0,5 und 4,0 liegt.

3. Verfahren zum Herstellen eines Katalysators nach einem der Ansprüche 1 bis 2, wobei das Verhältnis X1/M im Bereich zwischen 0,1 und 5,0 liegt.

4. Verfahren zum Herstellen eines Katalysators nach einem der Ansprüche 1 bis 3, wobei das Verhältnis P/M im Bereich zwischen 0,2 und 30,0 liegt.

5. Verfahren zum Herstellen eines Katalysators nach einem der Ansprüche 1 bis 4, wobei der Gehalt an Metall M im Bereich zwischen 0,01 bis 5 Gew.-% liegt.

6. Verfahren zum Herstellen eines Katalysators nach einem der Ansprüche 1 bis 5, wobei das Metall M Platin oder Palladium ist.

7. Verfahren zum Herstellen eines Katalysators nach einem der Ansprüche 1 bis 6, wobei die halogenierte Verbindung ausgewählt ist aus der Gruppe bestehend aus Fluor, Chlor, Brom und Iod.

8. Verfahren zum Herstellen eines Katalysators nach einem der Ansprüche 1 bis 7, wobei der Gehalt an halogenierter Verbindung im Bereich zwischen 0,1 bis 15,0 Gew.-% liegt.

9. Verfahren zum Herstellen eines Katalysators nach einem der Ansprüche 1 bis 8, wobei der die halogenierte Verbindung Chlor ist und der Chlorgehalt im Bereich zwischen 0,1 und 5,0 Gew.-% liegt.

10. Verfahren zum Herstellen eines Katalysators nach einem der Ansprüche 1 bis 9, wobei das Zinn zum Teil in Schritt b) eingeführt werden kann, wobei das Verfahren zu diesem Zeitpunkt einen zusätzlichen Schritt zum Abscheiden einer das Zinn ergänzenden Fraktion auf dem Träger umfasst, entweder zwischen den Schritten d) und e), gefolgt oder von einer Trocknung und einer Kalzination oder nicht, oder zwischen den Schritten e) und f), oder nach Schritt g), gefolgt von einer Trocknung und einer Kalzination.

## Claims

1. A process for preparing a catalyst comprising at least one metal M from the platinum group, tin, a phosphorus promoter, a halogenated compound, a porous support of alumina and at least one promoter X1 selected from the group constituted by gallium, indium, antimony, said process comprising the following steps :
a) introducing the promoter or the promoters X1 and phosphorus to a preformed sol of alumina precursor, and then shaping of the support,
b) introducing tin during the introduction of the promoter or the promoters X1 and phosphorus of step a) and before the shaping of the support, the steps a) and b) being simultaneous;
c) drying the product obtained at the end of step b);
d) calcining the product obtained in step c) at a temperature in the range 350°C to 650°C;
e) depositing at least one metal M from the platinum group;
f) drying in a stream of neutral gas or a stream of gas containing oxygen, at a moderate temperature not exceeding 150°C;
g) calcining the product obtained in step f) at a temperature in the range 350°C to 650°C.

2. A process for preparing a catalyst according to claim 1, in which the atomic ratio Sn/M is in the range 0.5 to 4.0.

3. A process for preparing a catalyst according to claim 1 or claim 2, in which the ratio X1/M is in the range 0.1 to 5.0.

4. A process for preparing a catalyst according to one of claims 1 to 3, in which the ratio P/M is in the range 0.2 to 30.0.

5. A process for preparing a catalyst according to one of claims 1 to 4, in which the quantity of metal M is in the range 0.01% to 5% by weight.

6. A process for preparing a catalyst according to one of claims 1 to 5, in which the metal M is platinum or palladium.

7. A process for preparing a catalyst according to one of claims 1 to 6, in which the halogenated compound is selected from the group constituted by fluorite, chloride, bromine and iodine.

8. A process for preparing a catalyst according to one of claims 1 to 7, in which the quantity of halogenated compound is in the range 0.1% to 15.0% by weight.

9. A process for preparing a catalyst according to one of claims 1 to 8, in which the halogenated compound is chloride and the chloride content is in the range 0.1% to 5.0% by weight.

10. A process for preparing a catalyst according to one of claims 1 to 10, in which the tin is only introduced in part in step b), the process then comprising a supplemental step for depositing a complementary fraction of the tin onto the support, either between steps d) and e), followed or not followed by drying and calcining, or between steps e) and f), or after step g), followed by drying and calcining.
